# EUROPEAN PATENT APPLICATION

(11) **EP 4 644 321 A1**
(43) Date of publication of application: **05.11.2025**
(21) Application number: 23912878.8
(22) Date of filing: 26.12.2023
(51) Int. Cl.: C01B 32/33, C01B 32/336, H01M 4/587, H01M 4/38, H01M 4/36, H01M 4/02

(54) **CARBON-SILICON COMPOSITE PARTICLES AND PREPARATION METHOD THEREFOR**

(30) Priority: 26.12.2022 KR 20220184107
(71) Applicant: Hanwha Solutions Corporation, Jung-gu Seoul 04541 (KR)
(72) Inventor: JEON, Hyo Jin, Seoul 04541 (KR); KIM, Eui Duk, Seoul 04541 (KR); PARK, Sarang, Seoul 04541 (KR); KIM, Do Heung, Seoul 04541 (KR); IM, Jangbin, Daejeon 34128 (KR); CHAE, Sujong, Busan 48445 (KR); LEE, Jinsu, Busan 48549 (KR); PARK, Seongsu, Changwon-si, Gyeongsangnam-do 51793 (KR); JANG, Dawon, Seoul 04541 (KR)
(74) Representative: Berggren Oy
(86) International application number: PCT/KR2023/021579
(87) International publication number: WO 2024/144203

(57) **Abstract**

According to an embodiment of the present invention, the present invention can provide carbon-silicon composite particles, each comprising: a porous carbon support comprising a surface layer part and a core part; and silicon (Si), wherein the porous carbon support comprises mesopores having a diameter of 2-50 nm, and the ratio of the volume of the mesopores of the surface layer part to the volume of the total mesopores of the porous carbon support is 0.5-0.76.

## Description

### TECHNICAL FIELD

The present invention relates to carbon-silicon composite particles and a preparation method therefor.

### BACKGROUND ART

Carbon materials refer to materials made of carbon, which is one of the most common resources on Earth. Carbon materials are very light and strong, and have excellent electrical and thermal conductivity, making them a key material widely used in fields such as hydrogen cars, aviation, secondary batteries and high-end consumer goods.

Meanwhile, as the scope of secondary batteries is expanding from portable electronic devices to electric vehicles or power storage, improvements in the capacity and cycle characteristics of secondary batteries are required. As one of the solutions, silicon-based active materials that can implement higher capacity than existing carbon materials are being proposed. These silicon-based active materials have high theoretical capacity, but they have a problem in that they reduce the lifespan of a battery due to their large volume expansion rate.

In order to solve this problem, active materials with a structure in which silicon is deposited on a porous carbon support have been proposed. However, conventional porous carbon supports mainly include micropores, and when chemical vapor deposition (CVD) is performed in a subsequent process, there is a problem in that the deposition does not reach the deep pores well.

### DISCLOSURE

### TECHNICAL PROBLEM

One of several objects of the present invention is to provide carbon-silicon composite particles having controlled pore characteristics such that deep pores can be sufficiently deposited during chemical vapor deposition, and a preparation method therefor.

One of several objects of the present invention is to provide carbon-silicon composite particles that are capable of producing a negative electrode material having high charge/discharge capacity, and a preparation method therefor.

One of several objects of the present invention is to provide carbon-silicon composite particles that capable of producing a negative electrode material having improved cycle characteristics, and a preparation method therefor.

One of several objects of the present invention is to provide carbon-silicon composite particles that are capable of producing a negative electrode material having excellent mechanical properties, and a preparation method therefor.

### TECHNICAL SOLUTION

According to an exemplary embodiment of the present invention, the present invention may provide carbon-silicon composite particles, including a porous carbon support including a surface layer part and a core part; and silicon (Si), wherein the porous carbon support includes mesopores having a diameter of 2 to 50 nm, and wherein the ratio of a volume of mesopores of the surface layer part to a volume of the total mesopores of the porous carbon support is 0.5 to 0.76.

In this case, the porous carbon support may have a ratio of the volume of mesopores to the volume of the total pores of 0.1 or more.

Meanwhile, a porosity of the surface layer part may be greater than a porosity of the core part of the porous carbon support.

In an example of the present invention, a tap density of the porous carbon support may be 0.7 g/mL or less.

In addition, a BET specific surface area of the porous carbon support may be in a range of 300 m²/g or more and/or 3,000 m²/g.

In an example of the present invention, a diameter of the porous carbon support may be 20 µm or less.

In an embodiment of the present invention, the porous carbon support may include macropores having a diameter exceeding 50 nm, and the ratio of a volume of macropores to a volume of the total pores of the porous carbon support may be 0.4 or less.

In an example, the silicon of the carbon-silicon composite particles according to the present invention may be disposed on a surface and inside pores of the porous carbon support.

In another example, a content of the silicon may be 10 wt% or more based on a weight of the total particles.

In addition, the present invention may provide a battery negative electrode material, including the carbon-silicon composite particles.

In addition, the present invention may provide a lithium-ion battery and/or an all-solid-state battery, including the battery negative electrode material.

In another exemplary embodiment of the present invention, the present invention may provide a method for preparing carbon-silicon composite particles, the method including a first step of preparing a porous carbon support including mesopores having a diameter of 2 nm to 50 nm, and having a ratio of a volume of mesopores of a surface layer part to a volume of the total mesopores of 0.5 to 0.76; and a second step of depositing silicon on the porous carbon support.

In this case, the depositing of the second step may be performed at a temperature of 300°C or more and/or 600°C or less and under a silane (SiH₄) gas atmosphere of 50 sccm or more and/or 500 sccm or less.

### ADVANTAGEOUS EFFECTS

One of the effects of the present invention is that it can provide carbon-silicon composite particles, which can sufficiently deposit silicon into the deep pores by controlling the ratio of mesopores formed in the surface layer, and a preparation method therefor.

One of the effects of the present invention is that it can provide carbon-silicon composite particles that are capable of producing a negative electrode material having high charge/discharge capacity, and a preparation method therefor.

One of the effects of the present invention is that it can provide carbon-silicon composite particles that are capable of producing a negative electrode material having improved cycle characteristics, and a preparation method therefor.

One of the effects of the present invention is that it can provide carbon-silicon composite particles that are capable of producing a negative electrode material having excellent mechanical properties, and a preparation method therefor.

However, the various and beneficial advantages and effects of the present invention are not limited to the above-described contents, and will be more easily understood in the process of describing specific embodiments of the present invention.

### DESCRIPTION OF DRAWINGS

FIGS. 1 and 2 are images taken by scanning electron microscopy after silane coating the porous carbon supports of Example 1 and Comparative Example 2, respectively.
FIG. 3 is a graph showing the results of electrochemical evaluation after manufacturing half coin cells using the porous carbon supports of Example 1 and Comparative Example 1, respectively.

### BEST MODE

Hereinafter, embodiments of the present invention will be described with reference to specific embodiments and the attached drawings. It should be understood that this is not intended to limit the technology described in the present specification to specific embodiments, but includes various modifications, equivalents and/or alternatives of the embodiments of the present invention. In connection with the description of the drawings, similar reference numerals may be used for similar components.

Additionally, in order to clearly explain the present invention in the drawings, parts that are not related to the description are omitted, and the thickness is enlarged to clearly express various layers and regions, and components with the same function within the scope of the same idea can be described by using the same reference numerals.

In the present specification, expressions such as "have", "may have", "include", or "may include" indicate the presence of a corresponding feature (e.g., a component such as a number, function, operation or part), and do not exclude the presence of additional features.

In the present specification, the expressions "A or B", "at least one of A or/and B", or "one or more of A or/and B" and the like may include all possible combinations of the items listed together. For example, "A or B", "at least one of A and B", or "at least one of A or B" may refer to all cases where (1) at least one of A is included, (2) at least one of B is included, or (3) at least one of A and at least one of B is included.

All numbers and expressions indicating the amounts of components, reaction conditions and the like described in the present specification should be understood to be modified by the term "about" in all cases unless otherwise stated.

In the present specification, micropores may mean pores having a diameter of less than 2 nm, mesopores may mean pores having a diameter of 2 nm to 50 nm, and macropores may mean pores having a diameter of more than 50 nm.

The present invention relates to carbon-silicon composite particles. According to an embodiment of the present invention, carbon-silicon composite particles may include a porous carbon support including a surface layer part and a core part; and silicon (Si), wherein the porous carbon support may include mesopores having a diameter of 2 nm to 50 nm.

In this case, the ratio of a volume of the mesopores of the surface layer part to a volume of the total mesopores of the porous carbon support may be 0.5 or more.

Porous carbon supports are widely used as negative electrode materials in the fields of secondary batteries, all-solid-state batteries and the like. Such porous carbon supports have the advantage of small volume change, but have the limitation of low specific capacity. In order to supplement this, composites combining a porous carbon support and high-specific-capacity silicon have been studied, but when the content of silicon is increased for high charge/discharge capacity, there is a problem in that the charge/discharge cycle characteristics of the battery deteriorate due to volume expansion of locally aggregated silicon and the like.

The present invention has been devised to solve the above problem, and when the ratio of the mesopores of the surface layer part to the total mesopores of the porous carbon support of the carbon-silicon composite particles according to the present invention is 0.5 or more, the mesopores formed in the surface layer part serve as passages through which pores can be formed to the core such that silicon can be deposited into the interior of the support. In the present specification, the core part of the porous carbon support may mean an area within a distance of 1/2 the radius of the support from the center of the support, and the surface layer part may mean the remaining area of the support excluding the core part. In addition, the volume of the total mesopores of the porous carbon support may mean the volume of the total mesopores arranged in the interior of the porous carbon support, and the volume of the mesopores of the surface layer part may mean the volume of the total mesopores arranged in the surface layer of the porous carbon support. In addition, the volume of the mesopores of the surface layer part may mean the volume of the area corresponding to the surface layer part with respect to the total mesopores arranged in the porous carbon support.

The upper limit of the ratio of the volume of the mesopores of the surface layer part to the volume of the total mesopores may be, for example, 0.76 or less, 0.74 or less, 0.72 or less, 0.70 or less, 0.68 or less, or 0.66 or less, but is not limited thereto. If the ratio of the mesopores of the surface layer part to the total mesopores of the carbon-silicon composite particles is out of the above range, the charge/discharge capacity may be reduced and the cycle characteristics may be degraded.

In one example of the present invention, the porous carbon support of the carbon-silicon composite particles according to the present invention may have a ratio of the volume of the mesopores to the volume of the total pores of 0.1 or more. The pores of the porous carbon support may be classified into micropores with a diameter of less than 2 nm, mesopores with a diameter of 2 nm to 50 nm, and macropores with a diameter of more than 50 nm, depending on their size. These porous supports have been studied in the direction of increasing the ratio of micropores to increase the specific surface area, or increasing the ratio of macropores to increase the amount of material supported inside the pores. However, when there are many micropores, silicon is difficult to deposit inside the pores, which causes a problem of reduced electrical capacity. In addition, when there are many macropores, silicon agglomeration occurs, which generates stress during repeated charge/discharge processes that can mechanically damage the negative electrode material.

On the other hand, in the case of mesopores, silicon may be sufficiently deposited deep into the core part when depositing. The carbon-silicon composite particles according to the present invention may deposit a sufficient amount of silicon inside the pores of the porous support by including mesopores within a predetermined range.

The porous carbon support may have a ratio of the volume of mesopores to the volume of the total pores of 0.10 or more, 0.12 or more, 0.14 or more, or 0.15 or more, but is not limited thereto. The upper limit of the ratio of the volume of mesopores to the volume of the total pores of the porous carbon support is not particularly limited, but may be, for example, 0.7 or less. When the ratio of the volume of mesopores to the volume of the total pores of the porous carbon support of the carbon-silicon composite particles satisfies the above range, the porous carbon support may have excellent electrical properties while preventing excessive aggregation of silicon, thereby preventing damage due to volume expansion of silicon.

In an embodiment of the present invention, the tap density of the porous carbon support of the carbon-silicon composite particles according to the present invention may be 0.7 g/mL or less. The tap density of the porous carbon support may be a value measured using PT-TD200 (Pharma Test). Specifically, 40 mL of a porous carbon support is loaded into a cylinder, and the primary volume is observed after 1,000 tappings. After the observation, tapping is performed 1,000 times again, and the process of observing the volume is repeated three times until there is no difference from the previous volume, and then, the tap density may be calculated as the final volume. The tap density of the porous carbon support may be 0.70 g/mL or less, 0.65 g/mL or less, or 0.60 g/mL or less, and may be 0.05 g/mL or more, 0.10 g/mL or more, 0.15 g/mL or more, 0.20 g/mL or more, or 0.22 g/mL or more, but is not limited thereto. If the tap density of the porous carbon support of the carbon-silicon composite particles is too low, process control may be difficult during silane gas deposition, which may result in a decrease in yield. In addition, if the tap density of the porous carbon support of the carbon-silicon composite particles is too high, uniform coating may be difficult during silane gas deposition.

In one example of the present invention, the BET specific surface area of the porous carbon support of the carbon-silicon composite particles according to the present invention may be in a range of 300 m²/g or more and/or 3,000 m²/g. The BET specific surface area of the porous carbon support may be a value measured using ASAP 2420 (Micromeritics Instrument (USA)). Specifically, the analysis was performed after vacuum drying at 300°C for 5 hours, and the BET equation and the BJH equation may be calculated by using the N2/77K Isotherm adsorption results according to ISO9277. The BET specific surface area of the porous carbon support may be 300 m²/g or more, 400 m²/g or more, or 500 m²/g or more, and may be 3,000 m²/g or less, 2,800 m²/g or less, 2,600 m²/g or less, 2,000 m²/g or less, or 1,900 m²/g or less, but is not limited thereto. If the BET specific surface area of the porous carbon support of the carbon-silicon composite particles is excessively low, the proportion of macropores may increase, which may lower the mechanical strength of the negative electrode material and may result in a lack of effective pores. In addition, if the BET specific surface area of the porous carbon support of the carbon-silicon composite particles is too high, the proportion of micropores may increase, and silicon may not be sufficiently deposited into the core part of the porous carbon support.

In an embodiment of the present invention, the diameter of the porous carbon support of the carbon-silicon composite particles according to the present invention may be 20 µm or less. The diameter may refer to the D50 diameter and may be a value measured using a MICROTRAC S3500 device. Specifically, it may refer to an average value obtained by dispersing the porous carbon support in ethanol and then performing particle size analysis three times. The diameter of the porous carbon support may be 20 µm or less, 18 µm or less, 16 µm or less, 14 µm or less, 12 µm or less, or 10 µm or less, and may be 1 µm or more, 2 µm or more, 3 µm or more, 4 µm or more, or 4.5 µm or more, but is not limited thereto. When the diameter of the porous carbon support of the carbon-silicon composite particles is too small, upon performing coating, silicon may be quickly filled inside, and then, additional coating may be performed on the surface part such that the surface coating layer may be formed thickly. In this case, deterioration may be accelerated during charging and discharging, and the agglomeration of materials with small particle sizes may occur during electrode manufacturing, and deterioration of the agglomerated portion may be significant. In addition, if the diameter of the porous carbon support is too large, it may be difficult to diffuse silane gas into the interior of the porous carbon support, making it difficult to form a uniform silicon coating layer inside the support. In addition, if the diameter of the porous carbon support is too large, it may be difficult to uniformly coat a slurry on a current collector during electrode manufacturing, which may reduce the uniformity of capacity.

In one example, the porous carbon support of the carbon-silicon composite particles according to the present invention may include macropores having a diameter exceeding 50 nm. In this case, the ratio of the volume of the macropores to the volume of the total pores of the porous carbon support may be 0.4 or less. The ratio of the volume of the macropores to the total pore volume of the porous carbon support may be 0.40 or less, 0.35 or less, 0.30 or less, 0.25 or less, 0.20 or less, or 0.15 or less, but is not limited thereto. The lower limit of the ratio of the volume of the macropores to the total pore volume of the porous carbon support is not particularly limited, but may be, for example, 0 or more or more than 0. If the ratio of the macropores of the porous carbon support of the carbon-silicon composite particles is too high, the mechanical strength of the negative electrode material manufactured with the carbon-silicon composite particles may be reduced. In addition, the local agglomeration of silicon may occur inside the negative electrode material, which may cause stress due to volume expansion during repeated charge/discharge processes, thereby causing damage to the negative electrode material.

In one example, the silicon of the carbon-silicon composite particles according to the present invention may be disposed on a surface and inside the pores of the porous carbon support. The silicon may be formed by deposition as described below, and the carbon-silicon composite particles according to the present invention may have a structure in which silicon is deposited on the surface support and inside the pores of the porous carbon. Since the carbon-silicon composite particles according to the present invention have the above structure, the negative electrode material manufactured from the carbon-silicon composite particles according to the present invention may have high electrical capacity while minimizing the influence due to volume expansion of silicon.

In another example, the content of silicon of the carbon-silicon composite particles according to the present invention may be 10 wt% or more based on the weight of the total particles. The content of silicon of the carbon-silicon composite particles may be a value obtained by analysis through energy dispersive spectrometer (EDS). The content of silicon of the carbon-silicon composite particles may be 10 wt% or more, 15 wt% or more, 20 wt% or more, 25 wt% or more, or 30 wt% or more, but is not limited thereto. In addition, the content of silicon of the carbon-silicon composite particles may be 60 wt% or less, 58 wt% or less, 56 wt% or less, 54 wt% or less, 52 wt% or less, or 50 wt% or less, but is not limited thereto. If the content of silicon of the carbon-silicon composite particles is too low, the electric capacity may be reduced. In addition, if the content of silicon is too high, the problem caused by the volume expansion of silicon during charge and discharge may not be solved, which may cause structural damage to the negative electrode material and deteriorate the cycle characteristics.

In addition, the present invention relates to a battery negative electrode material including the carbon-silicon composite particles described above. The battery negative electrode material including the carbon-silicon composite particles according to the present invention may have improved mechanical strength along with high electric capacity and excellent cycle characteristics.

The method for manufacturing a battery negative electrode material is not particularly limited, and a general method for manufacturing a battery negative electrode material may be used. For example, the battery negative electrode material may be manufactured by mixing carbon-silicon composite particles, active materials, conductive agents and binders, and coating/drying/rolling the material on an electrode current collector, but is not limited thereto.

In addition, the present invention relates to a battery including the above-described battery negative electrode material. The battery including the battery negative electrode material according to the present invention may be a lithium-ion battery or an all-solid-state battery, but is not limited thereto.

The lithium-ion battery may specifically include a positive electrode, a negative electrode, a separator and an electrolyte. In this case, the negative electrode may include the above-described battery negative electrode material. The positive electrode may use a material that is usable in a lithium-ion battery, and may include, for example, one or more positive electrode active materials selected from doped or undoped lithium nickel oxide, lithium cobalt oxide, lithium cobalt aluminum oxide, lithium nickel cobalt manganese oxide, lithium manganese oxide and lithium nickel cobalt aluminum oxide, and a positive electrode current collector selected from aluminum, stainless steel, nickel, titanium, platinum or an alloy thereof, but is not limited thereto. In addition, the separator may use a typical separator that is usable in a lithium-ion battery. The separator may include, for example, one or more selected from glass fiber, polyester, Teflon, polyethylene, polypropylene and polytetrafluoroethylene (PTFE), but is not limited thereto.

The negative electrode of the lithium-ion battery may include the above-described battery negative electrode material. The negative electrode may include a negative electrode current collector and a battery negative electrode material, and the negative electrode current collector may include one or more selected from aluminum, stainless steel, nickel, titanium, platinum or an alloy thereof, but is not limited thereto.

The electrolyte of the lithium-ion battery may include an organic liquid electrolyte, an inorganic liquid electrolyte, a polymer electrolyte or a molten inorganic electrolyte that is usable in a lithium-ion battery, but is not limited thereto.

The all-solid-state battery may specifically include a positive electrode, a negative electrode and a solid electrolyte, and may further include a separator if necessary, but is not limited thereto. The positive electrode may include the above-described positive electrode active material, and may further include a positive electrode current collector if necessary, but is not limited thereto.

The negative electrode may include a battery negative electrode material according to the present invention. The negative electrode may have a single-layer structure including the battery negative electrode material, or may further include a negative electrode current collector if necessary, but is not limited thereto.

The solid electrolyte may selectively use a solid electrolyte that is usable in an all-solid-state battery. The solid electrolyte may be at least one selected from the group consisting of, for example, Garnet-type, Nasicon-type, LISICON-type, perovskite-type and LiPON-type, but is not limited thereto.

In addition, the present invention relates to a method for preparing carbon-silicon composite particles. The method for preparing carbon-silicon composite particles according to the present invention may include a first step of preparing a porous carbon support having mesopores having a diameter of 2 nm to 50 nm and a ratio of a volume of mesopores of a surface layer part to a volume of the total mesopores of 0.5 to 0.76; and a second step of depositing silicon on the porous carbon support.

Hereinafter, the method for manufacturing a porous carbon support in the first step of the method for preparing carbon-silicon composite particles according to the present invention will be described in detail, but the method for manufacturing a porous carbon support of carbon-silicon composite particles according to the present invention is not particularly limited to the following method.

A porous carbon support according to an embodiment of the present invention may be manufactured by a method including (1) synthesizing pitch by pyrolysis and condensation polymerization of a petroleum-based raw material, (2) solidifying the pitch to obtain solid-phase pitch, (3) stabilizing the pitch, (4) carbonizing the stabilized pitch to obtain a carbonized body, and (5) activating the carbonized body to obtain a porous carbon support.

### Step (1)

Step (1) of the method for manufacturing a porous carbon support according to the present invention may be a step of synthesizing pitch by pyrolysis and condensation polymerization of a petroleum-based raw material.

In a specific embodiment of the present invention, the petroleum-based raw material may include at least one selected from the group consisting of pyrolysis fuel oil (PFO), naphtha cracking bottom oil (NCB), ethylene cracker bottom oil (EBO), vacuum residue (VR), de-asphalted oil (DAO), atmospheric residue (AR), fluid catalytic cracking (RFCC-DO), residue fluid catalytic cracking decant oil (RFCC-DO) and heavy aromatic oil. In a preferred embodiment of the present invention, the petroleum-based raw material may include pyrolysis fuel oil.

In a specific embodiment of the present invention, the petroleum-based raw material may include an aromatic compound in an amount of 10 to 90 wt%. Preferably, the petroleum-based raw material may include an aromatic compound in an amount of 20 to 80 wt%, and more preferably 30 to 70 wt%. When the content of the aromatic compound in the petroleum-based raw material satisfies the above range, even if the solid-phase pitch pellet described below is stabilized, carbonized and activated without separately pulverizing, a porous carbon support having controlled pore characteristics may be obtained.

In a specific embodiment of the present invention, the aromatic compound may be a compound having 1 to 4 aromatic rings. Specifically, the aromatic compound may include at least one selected from the group consisting of substituted or unsubstituted benzene, naphthalene, phenanthrene, indene, biphenyl, anthracene, tetralin and fluorene. In this case, even if the solid-phase pitch pellet described below is stabilized, carbonized and activated without separately pulverizing, a porous carbon support having controlled pore characteristics may be obtained.

In a specific embodiment of the present invention, the pyrolysis and condensation polymerization of the petroleum-based raw material may be performed at a temperature of 350 to 500°C. In a preferred embodiment of the present invention, the pyrolysis and condensation polymerization of the petroleum-based raw material may be performed at a temperature of 400 to 500°C. In a more preferred embodiment of the present invention, the pyrolysis and condensation polymerization of the petroleum-based raw material may be performed at a temperature of 430 to 470°C. When the pyrolysis and condensation polymerization temperature of the petroleum-based raw material is 350 to 500°C, pitch including a large amount of relatively low-molecular-weight components may be manufactured, and during the activation process of step (5) described below, components having relatively small molecular weights are vaporized first, thereby sufficiently forming mesopores in the carbon support. If the pyrolysis and condensation polymerization temperature of the petroleum-based raw material is less than 350°C, it is difficult to manufacture solid-phase pitch at room temperature, and if this temperature exceeds 500°C, a large amount of relatively high-molecular-weight components are included in the pitch, making it difficult to manufacture a carbon support having mesopores.

In a specific embodiment of the present invention, the pyrolysis and condensation polymerization of petroleum-based raw materials may be performed under an atmosphere of an oxidizing gas, an inert gas or a mixture gas thereof. In a preferred specific embodiment of the present invention, the oxidizing gas may be oxygen, ozone or a combination thereof, the inert gas may be nitrogen, helium, neon, argon or a combination thereof, and the mixture gas thereof may be air, but is not particularly limited thereto.

When an oxidizing gas is used in the pyrolysis and condensation polymerization of petroleum-based raw materials, pitch having a high softening point may be manufactured, but it is difficult to perform the pyrolysis and condensation polymerization at a high temperature. When an inert gas is used in the pyrolysis and condensation polymerization of petroleum-based raw materials, the pyrolysis and condensation polymerization may be performed at a high temperature, but it is difficult to manufacture pitch having a relatively high softening point. When a mixed gas of an oxidizing gas and an inert gas is used in the pyrolysis and condensation polymerization of petroleum-based raw materials, the pyrolysis and condensation polymerization may be performed at a relatively high temperature to manufacture pitch having a relatively high softening point.

In a specific embodiment of the present invention, the gas may be supplied at a flow rate of 10 to 800 mL/min during the pyrolysis and condensation polymerization of the petroleum-based raw material. In a preferred embodiment of the present invention, the gas may be supplied at a flow rate of 100 to 500 mL/min during the pyrolysis and condensation polymerization of the petroleum-based raw material. If the flow rate of the gas is less than 10 mL/min, the yield of the pitch increases, but the low molecular weight component increases too much, which is disadvantageous for the subsequent process (e.g., stabilization). If the flow rate of the gas exceeds 800 mL/min, the yield of the pitch may decrease.

In a specific embodiment of the present invention, the pyrolysis and condensation polymerization of the petroleum-based raw material may be performed for 1 to 10 hours. In a preferred embodiment of the present invention, the pyrolysis and condensation polymerization of the petroleum-based raw material may be performed for 2 to 8 hours. In a more preferred embodiment of the present invention, the pyrolysis and condensation polymerization of the petroleum-based raw material may be performed for 2 to 7 hours. If the pyrolysis and condensation polymerization time of the petroleum-based raw material is less than 1 hour, it is difficult to manufacture pitch having a high softening point, and if the pyrolysis and condensation polymerization time of the petroleum-based raw material exceeds 10 hours, quinolone-insoluble components may be excessively generated.

In a specific embodiment of the present invention, the pyrolysis and condensation polymerization of the petroleum-based raw material may be performed under stirring. The stirring conditions of the petroleum-based raw material are not particularly limited, but, for example, a stirrer rotating at 10 to 500 rpm may be used.

In a specific embodiment of the present invention, the pitch synthesized in step (1) may have a softening point of 200 to 350°C. In a preferred specific embodiment of the present invention, the pitch may have a softening point of 200 to 330°C. In a more preferred specific embodiment of the present invention, the pitch may have a softening point of 200 to 300°C. Since the pitch manufactured according to the present invention has a high softening point, when it is used as a precursor for manufacturing a carbon support, the stabilization process is easy, and a high yield may be obtained after carbonization and activation.

In a specific embodiment of the present invention, the yield of the pitch synthesized in step (1) may be 10 to 50 wt%. In another specific embodiment of the present invention, the yield of the pitch may be 10 to 40 wt%. In still another specific embodiment of the present invention, the yield of the pitch may be 20 to 30 wt%.

In a process for manufacturing a porous carbon support from a petroleum-based raw material according to an embodiment of the present invention, a step of pretreating the petroleum-based raw material may be performed before step (1) above. By removing low-boiling-point components included in the petroleum-based raw material through the pretreatment step, pitch having a higher softening point may be manufactured.

In a specific embodiment of the present invention, the pretreatment step may be performed at a temperature equal to or lower than the pyrolysis and condensation polymerization temperature of the petroleum-based raw material in step (1), but is not particularly limited to this condition. Specifically, the pretreatment step may be performed at 250 to 450°C, preferably 250 to 400°C, and more preferably 300 to 400°C.

In a specific embodiment of the present invention, the pretreatment step may be performed for a time equal to or shorter than the pyrolysis and condensation polymerization time of the petroleum-based raw material in step (1), but is not particularly limited to this condition. Specifically, the pretreatment step may be performed for 1 to 8 hours, preferably 1 to 6 hours, and more preferably 1 to 5 hours.

### Step (2)

In step (2) of the process for manufacturing a porous carbon support from a petroleum-based raw material according to an embodiment of the present invention, the pitch may be solidified to obtain solid-phase pitch.

The liquid-phase pitch obtained in step (1) is solidified, for example, by extrusion and cooling, to obtain solid-phase pitch. The process of extruding, cooling and solidifying the liquid-phase pitch to obtain solid-phase pitch may be performed by using a commercialized device. For example, this process may be performed by using a double belt cooler & flaker from IPCO, but is not particularly limited to this device.

The pitch obtained in step (2) has an average particle size of 1 to 30 mm, and preferably 5 to 25 mm. When the average particle size of the pitch is within this range, the pitch may be manufactured into a porous carbon support through stabilization, carbonization and activation described below without separately pulverizing the pitch.

However, if necessary, the pitch obtained in step (2) may be additionally crushed or pulverized and classified. The pitch may be further finely divided by crushing or pulverization, and the particle size distribution of the pitch may be made uniform by classification. Herein, the classification may be dry classification, wet classification or classification using a sieve. By crushing or pulverization and classification treatment, powder pitch having a diameter of 50 to 500 µm may be obtained.

### Step (3)

Step (3) of the method for manufacturing a porous carbon support according to the present invention may be a step of stabilizing the solid-phase pitch. Specifically, it may be a step of stabilizing the structure of the pitch by first oxidizing the solid-phase pitch. When the solid-phase pitch is pulverized in step (2), this step may be a step of stabilizing the pulverized powder pitch.

In a specific embodiment of the present invention, the stabilization of the pitch may be performed at a temperature of 100 to 500°C, and preferably 150 to 350°C. When stabilization of the pitch is performed at this temperature, the carbon structure within the pitch changes from thermoplastic to thermosetting such that the structure can be stably maintained during the subsequent carbonization process. In this case, the temperature rise rate may be 2 to 10°C/min. If this temperature rise rate is too slow, productivity is poor, and if the temperature rise rate is excessively fast, uniform stabilization treatment may be difficult.

In a specific embodiment of the present invention, the stabilization of the pitch may be performed at a pressure of 0.1 to 10 bar, and preferably 0.5 to 5 bar. If the stabilization of the pitch is performed at this pressure, the structure of the carbon inside the pitch may be sufficiently stabilized.

In a specific embodiment of the present invention, the stabilization of the pitch may be performed under a flow rate condition of an oxidizing gas, preferably air or oxygen, of 0.1 to 500 mL/min, and preferably 1 to 300 mL/min. If the stabilization of the pitch is performed under this oxidizing gas flow rate condition, the structure of the carbon inside the pitch may be sufficiently stabilized.

In a specific embodiment of the present invention, the stabilization of the pitch may be performed for 1 to 10 hours, and preferably 2 to 8 hours. When the stabilization of the pitch is performed during this time, the structure of the carbon inside the pitch may be sufficiently stabilized.

### Step (4)

Step (4) of the method for manufacturing a porous carbon support according to the present invention may be a step of carbonizing the stabilized pitch to obtain a carbonized body. Through the carbonization of the pitch, other functional groups included in the pitch are removed, and a carbonized body composed of substantially pure carbon may be obtained.

In a specific embodiment of the present invention, the carbonization of the pitch may be performed under an inert gas atmosphere. In a preferred specific embodiment of the present invention, the carbonization of the pitch may be performed under a nitrogen or argon atmosphere, but is not particularly limited thereto.

In a specific embodiment of the present invention, the carbonization of the pitch may be performed at a temperature of more than 700°C and less than 1,000°C, or more than 800°C and less than 1,000°C. If the temperature during carbonization of the pitch is lower than this range, carbonization may not be sufficiently achieved, and if the temperature during carbonization of the pitch is higher than this range, the carbonization yield may decrease.

In a specific embodiment of the present invention, carbonization of the pitch may be performed under a flow rate condition of an inert gas, preferably nitrogen, of 0.1 to 30 mL/min, and preferably 0.1 to 10 mL/min. If carbonization of the pitch is performed under this inert gas flow rate condition, the pitch may be sufficiently carbonized.

In a specific embodiment of the present invention, carbonization of the pitch may be performed for 0.5 to 5 hours, and preferably 1 to 3 hours. If carbonization of the pitch is performed during this time, the pitch may be sufficiently carbonized.

### Step (5)

In the method for manufacturing a porous carbon support according to the present invention, in step (5), a porous carbon support may be obtained by activating a carbonized body. By activating the carbonized body (carbonized pitch), pores are formed in the pitch, thereby obtaining a porous carbon support.

In a specific embodiment of the present invention, the activation of the carbonized body may be performed under an oxidizing gas atmosphere. In a preferred specific embodiment of the present invention, the activation of the carbonized body may be performed under a steam atmosphere, but is not particularly limited thereto.

In a specific embodiment of the present invention, the activation of the carbonized body may be performed at a temperature of more than 700°C and less than or equal to 1,000°C or more than or equal to 800°C and less than or equal to 1,000°C. When the activation of the carbonized body is performed at this temperature, a porous carbon support in which micropores and mesopores are sufficiently formed may be obtained.

In a specific embodiment of the present invention, the activation of the carbonized body may be performed at a pressure of 0.1 to 10 bar, and preferably 0.1 to 5 bar. When the activation of the carbonized body is performed at this pressure, a porous carbon support in which micropores and mesopores are sufficiently formed may be obtained.

In a specific embodiment of the present invention, the activation of the carbonized body may be performed under the condition of a flow rate of an oxidizing gas, preferably water vapor, of 0.1 to 100 mL/min, and preferably 0.1 to 50 mL/min. When the activation of the carbonized body is performed under this oxidizing gas flow rate condition, a porous carbon support in which micropores and mesopores are sufficiently formed may be obtained.

In a specific embodiment of the present invention, the activation of the carbonized body may be performed for 0.5 to 5 hours, and preferably 1 to 3 hours. When the activation of the carbonized body is performed during this time, a porous carbon support in which micropores and mesopores are sufficiently formed may be obtained.

In a specific embodiment of the present invention, steps (3) to (5) above may each be performed in a heating furnace using microwaves. In a preferred specific embodiment of the present invention, steps (3) to (5) above may all be performed in a heating furnace using microwaves. A heating furnace using microwaves is preferable because it can increase the temperature of the pellets themselves without increasing the external temperature of the pitch pellets, but is not particularly limited thereto.

In a specific embodiment of the present invention, steps (3) to (5) above may be performed continuously in one device. In a preferred specific embodiment of the present invention, steps (3) to (5) above may be performed continuously in one rotary kiln, but is not particularly limited thereto. Since stabilization, carbonization and activation of the pitch pellets are performed continuously in one device, optimization of the process may be easily achieved.

In a specific embodiment of the present invention, the porous carbon support obtained in step (5) may be further crushed or pulverized and classified. The porous carbon support may be further finely divided through crushing or pulverizing, and the particle size distribution of the porous carbon support may be made uniform through classification. Herein, the classification may be dry classification, wet classification, classification using a sieve and the like. By crushing or pulverizing and classifying, a porous carbon support powder having a diameter of 1 to 20 µm may be obtained.

The deposition of the second step of the method for preparing carbon-silicon composite particles according to the present invention may be performed at a temperature of 300°C or more and/or 600°C or less and under a silane (SiH₄) gas atmosphere of 50 sccm or more and/or 500 sccm or less.

### MODES OF THE INVENTION

Hereinafter, preferred examples are presented to help understand the present invention. However, the following examples are provided only to help understand the present invention more easily, and the content of the present invention is not limited by the following examples.

### Manufacture Example 1: Manufacture of porous carbon support

300 g of petroleum-based residual oil (YNCC, HTC PFO (pyrolysis fuel oil)) was placed in a reactor equipped with a stirrer, and pyrolysis and condensation polymerization were performed at 450°C for 3 hours while supplying nitrogen at a flow rate of 100 mL/min. In this case, the stirrer was rotated at a speed of 200 rpm to mix the reactants. The polymerized pitch was solidified and pelletized to obtain solid-phase pitch pellets having an average particle size of 1 to 30 mm.

The solid-phase pitch pellets obtained above were pulverized, and then placed in a rotary kiln having three zones to sequentially perform stabilization, carbonization and activation. The conditions for stabilization, carbonization and activation are as shown in Table 1 below.

The activated carbonized body, which was activated above, was pulverized using a pulverizer (NETZ, air jet mill) to manufacture a porous carbon support.

### Manufacture Examples 2 to 3

Porous carbon supports were manufactured in the same manner as Manufacture Example 1, except that the carbonization and activation conditions were changed as shown in Table 1 below.

**[Table 1]**

| Step | Condition | Manufacture Example 1 | Manufacture Example 2 | Manufacture Examine 3 |
|---|---|---|---|---|
| Stabilizing | Temperature (°C) | 310 | 310 | 310 |
| | Time (hr) | 2 | 2 | 2 |
| | Atmosphere | Air | Air | Air |
| Carbonizi ng | Temperature (°C) | 900 | 900 | 1000 |
| | Time (hr) | 1 | 1 | 1 |
| | Atmosphere | Nitrogen | Nitrogen | Nitrogen |
| Activating | Temperature (°C) | 900 | 900 | 1000 |
| | Time (hr) | 3 | 2 | 3 |
| | Flow rate of water vapor (mL/min) | 10 | 10 | 10 |

Table 2 below shows the measured physical properties of the manufactured porous carbon supports. The specific surface area of the porous carbon supports was measured using Belsorp mini II according to ASTM D4820-93. The tap density of the carbon supports was measured using a tap density analyzer (Electrolab, ETD-1020x) according to ASTM B527. The average particle size of the carbon supports was measured using a particle size analyzer (Horiba, laser particle analyzer, LA-960V2) according to ASTM E112.

**[Table 2]**

| | Manufacture Example 1 | Manufacture Example 2 | Manufacture Examine 3 |
|---|---|---|---|
| Average Particle Size (µm) | 9.21 | 6.34 | 7.20 |
| Specific Surface Area (m²/g) | 1240.9 | 1417.7 | 988.6 |
| Tan Density (g/mL) | 0.59 | 0.36 | 0.43 |
| Micropores (%) | 72.8 | 60.8 | 23.9 |
| Mesopores (%) | 25.1 | 31.1 | 62.1 |
| Macropores (%) | 2.4 | 8.1 | 2.5 |
| Ratio of mesopores of surface laver part | 0.66 | 0.63 | 0.51 |

### Example 1: Preparation of carbon-silicon composite particles

Carbon-silicon composite particles were prepared using the porous carbon support prepared in Manufacture Example 1. 15 to 20 g of the porous carbon support powder of Manufacture Example 1 was placed in a rotary kiln, and silane (SiH₄) gas was injected to coat the porous carbon support.

The pressure during the silane gas coating was performed at atmospheric pressure, and the coating was performed for 1 hour at a temperature of 475°C and a flow rate of 300 sccm.

### Examples 2 and 3

Carbon-silicon composite particles were prepared in the same manner as in Example 1, except that the porous carbon supports prepared in Manufacture Example 2 and Manufacture Example 3 were used, respectively.

**[Table 3]**

| | | Example 1 | Example 2 | Example 3 |
|---|---|---|---|---|
| Physical Properties of Carbon Support After Coating | Average Particle Size (µm) | 16.7 | 6.48 | 7.83 |
| | Specific Surface Area (m²/g) | 1.28 | 177.4 | 5.32 |
| | Tap Density (g/mL) | 0.63 | 0.60 | 0.64 |
| | Content of Silicon (wt%) | 32.0 | 34.9 | 39.7 |

### Comparative Example 1

Carbon-silicon composite particles were prepared in the same manner as in Example 1, except that graphite having a diameter of 17.08 µm was used as a porous carbon support, and the deposition was performed for 47 minutes at a flow rate of 100 sccm during silane gas deposition.

### Comparative Example 2

Carbon-silicon composite particles were prepared in the same manner as in Example 1, except that a commercial product (Ingevity^{®}, USA, product name BAX1500) having a diameter of 4.28 µm was used as a porous carbon support.

**[Table 4]**

| | Comparative Example 1 | Comparative Example 2 |
|---|---|---|
| Average Particle Size (µm) | 17.08 | 4.28 |
| Specific Surface Area (m²/g) | 5.4 | 1934.1 |
| Tap Density (g/mL) | 0.96 | 0.21 |
| Micropores (%) | 0 | 12.1 |
| Mesopores (%) | 44.0 | 71.6 |
| Macropores (%) | 56.0 | 16.3 |
| Ratio of Mesopores of Surface Layer Part | 0.42 | 0.78 |

**[Table 5]**

| | | Comparative Example 1 | Comparative Example 2 |
|---|---|---|---|
| Physical Properties of Carbon Support After Coating | Average Particle Size (µm) | 18.5 | 5.44 |
| | Specific Surface Area (m²/g) | 2.94 | 206.42 |
| | Tap Density (g/mL) | 1.02 | 0.57 |
| | Content of Silicon (wt%) | 5.7 | 27.3 |

Table 4 above shows the measured physical properties of the porous carbon supports of Comparative Examples 1 and 2, and Table 5 shows the coating conditions of silane gas and the properties of the carbon support after coating.

Referring to Tables 3 and 5 above, it can be confirmed that Examples 1 to 3 all had a silicon coating amount of 32 wt% or more. On the other hand, Comparative Example 1 showed a silicon content of 5.7 wt%, and Comparative Example 2 showed a silicon content of 27.3 wt%, showing a lower silicon content than the examples. This is because the porous carbon support of Comparative Example 2 showed a high pore volume such that when the same flow rate of silane gas was flowed, the silicon could not fill the pores. As a result, it showed a lower silicon content than the examples, and the problem of ignition occurred due to the very small silicon existing in the carbon structure being naturally oxidized, thereby showing low electrochemical characteristics.

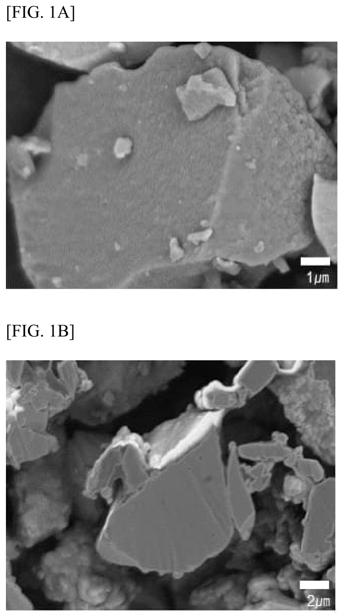

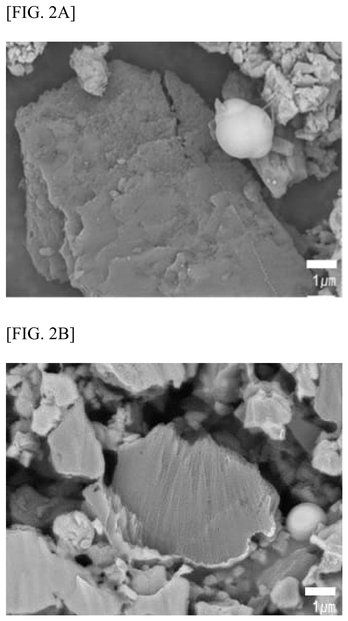

FIG. 1 is a set of images of the carbon-silicon composite particles prepared in Example 1, and FIG. 2 is a set of images of the carbon-silicon composite particles prepared in Comparative Example 2. Referring to FIG. 1, it can be confirmed that silicon nanoparticles were not generated in the case of Example 1. On the other hand, referring to FIG. 2, it can be confirmed that silicon nanoparticles were generated in the case of Comparative Example 2, and that silicon particles were formed on the outside without much silicon being deposited inside.

As described above, in the case of the porous carbon support of the carbon-silicon composite particles of Example 1, since the surface layer included mesopores at a certain ratio, it had a high silicon content but did not generate silicon nanoparticles. This is the result of the silane gas being well deposited inside the mesopores of the porous carbon support.

On the other hand, in the case of Comparative Example 2, the amount of silane coating was very small, the silane coating was not uniform, and silicon nanoparticles were generated. Therefore, it can be seen that the silane did not penetrate into the pores of the core part of the support and was mainly coated on the outside of the support because mesopores were not formed on the outside of the carbon support.

### Experimental Example 1: Electrochemical evaluation of secondary battery

Half coin cells were manufactured by using the prepared carbon-silicon composite particles.

A slurry was prepared by mixing the carbon-silicon composite particles of the examples and comparative examples: conductive material: binder in a ratio of 8 : 1 : 1. In this case, the conductive material used super-P, and the binder used a mixture of styrene butadiene rubber (SBR) and sodium carboxymethyl cellulose (CMC) in a weight ratio of 5:5.

The slurry was uniformly applied to copper foil and dried for the first time in an oven at 80°C for about 1 hour. After primary drying, roll pressing was performed and secondary drying was performed in a vacuum oven at 120°C for about 6 hours and 30 minutes to manufacture a negative electrode plate.

Half coin cells were manufactured using the above-manufactured negative electrode plate and lithium foil as counter electrodes. A porous polyethylene film was used as a separator, and CR2032 half coin cells were manufactured under the conditions shown in Table 6 below.

The electrolyte was prepared by dissolving 10 wt% of fluoro-ethylene carbonate (FEC), 0.2 wt% of lithium tetrafluoroborate (LiBF₄), 0.5 wt% of vinylene carbonate (VC) and 1 wt% of propane sulton (PS) as additives in a solution in which 1.3 M LiPF₆ was dissolved in a solvent in which ethylene carbonate (EC), ethyl methyl carbonate (EMC) and dimethyl carbonate (DMC) were mixed in a volume ratio of 3 : 5 : 2.

**[Table 6]**

| | |
|---|---|
| Composition (AM:CM:BM) | 8:1:1 |
| Area Capacity (mAh/cm²) | 1 |
| Electrolyte | 1.3 M LiPF6 EC/EMC/DMC 3:5:2, FEC 10%, LiBF4 0.2%, 0.5% VC, 1% PS |
| Cut-off Voltage(V) | Formation: 0.005-1.5, Cycle test: 0.005-1.5 |
| C-rate (C) | Formation: 0.1-0.1, 0.01C cut-off at 0.005V (CV) |

In Table 6 above, AM, CM and BM represent the active material (silane-deposited porous carbon support), conductor (Super P carbon black) and binder (styrene-butadiene rubber/carboxymethyl cellulose 5:5), respectively, and EC, EMC, DMC, FEC, VC and PS represent ethylene carbonate, ethyl methyl carbonate, dimethyl carbonate, fluoroethylene carbonate, vinylene carbonate, and propane sultone, respectively. Electrochemical analysis was performed on the manufactured half coin cells under the following conditions.
Cut off voltage (V): 0.005 - 1.5V
(Formation), 0.005 - 1.2V (Cycle) Formation
C-rate (C): 0.1C lithiation, 0.1C delithiation Cycle C-rate (C): 0.5C lithiation, 0.5C delithiation

**[Table 7]**

| | Charge Capacity (mAh/g) | Discharge Capacity (mAh/g) | ICE (%) |
|---|---|---|---|
| Example 1 | 2128 | 1922 | 90.3 |
| Example 2 | 2113 | 1917 | 90.7 |
| Example 3 | 2378 | 2190 | 92.1 |
| Comparative Example 1 | 582 | 629 | 92.5 |
| Comparative Example 2 | 860.1 | 529.7 | 68.9 |

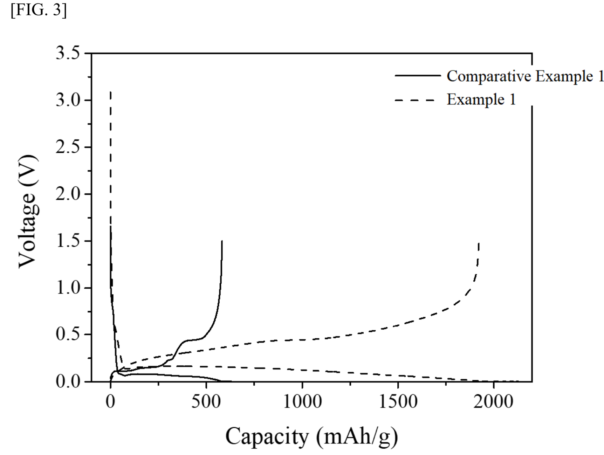

The above charge-discharge capacity characteristics were measured as the charge capacity when the charge was completed, and the discharge capacity when the discharge was started, as shown in the graph in FIG. 3. The ICE is a value expressed by dividing the discharge capacity by the charge capacity. Referring to Table 7, it can be seen that the half coin cells manufactured from the porous carbon support of the examples showed a charge capacity and discharge capacity that were more than twice as high as the half coin cells manufactured from the porous carbon support of the comparative examples. In addition, it can be confirmed that the half coin cells manufactured from the example had excellent charge capacity and discharge capacity, and the initial Coulombic efficiency (ICE) had a consistently high value.

### Experimental Example 2: Electrochemical evaluation of all-solid-state battery

An all-solid-state battery was manufactured using the manufactured carbon-silicon composite particles.

The solid electrolyte used sulfide-based argyrodite with a diameter of 5 µm, and it was manufactured into pellets by applying a pressure of 130 MPa.

In the examples and comparative examples, carbon-silicon composite particles: solid electrolyte: conductive agent were mixed in a ratio of 50:40: 10 and applied onto the manufactured pellets, and a pressure of 440 MPa was applied to manufacture a laminate. The solid electrolyte used an argyrodite sulfide-based solid electrolyte having a diameter of 1 µm, and VGCF was used as the conductive agent.

The manufactured laminate and a 1t (1 mm) thick lithium metal were used as counter electrodes, and a torque wrench was used to apply a force of 50 kgf to manufacture an all-solid-state battery compression cell.

Electrochemical analysis was performed on the manufactured all-solid-state battery compression cell under the following conditions.
Cut off voltage (V): 0.005 - 1.5V (Formation), 0.005 - 1.0V (Cycle)
Formation C-rate (C): 0.1C lithiation, 0.1C delithiation
Cycle C-rate (C): 0.3C lithiation, 0.3C delithiation

**[Table 8]**

| | C-rate | Charge Capacity (mAh/g) | Discharge Capacity (mAh/g) | ICE(%) |
|---|---|---|---|---|
| Comparative Example 1 | 0.1C | 956.6 | 693.7 | 72.5 |
| Example 3 | 0.1C | 2410.4 | 1902.2 | 78.9 |

Table 8 above shows the results of measuring the electrochemical performance of all-solid-state batteries manufactured using the carbon-silicon composite particles of Example 3 and Comparative Example 1. Referring to Table 8, when the carbon-silicon composite particles according to the example of the present invention are applied to the negative electrode material of the all-solid-state battery, it can be confirmed that it has a high charge/discharge capacity and excellent cycle characteristics. On the other hand, the all-solid-state battery manufactured as the comparative example showed a level of less than 50% of the example in terms of charge and discharge capacity.

Although the embodiments of the present invention have been described in detail above, the present invention is not limited by the above-described embodiments and the attached drawings, but is intended to be limited by the appended claims. Therefore, various forms of substitution, modification and change may be made by those skilled in the art within the scope that does not depart from the technical idea of the present invention described in the claims, and this will also fall within the scope of the present invention.

### INDUSTRIAL APPLICABILITY

According to an embodiment of the present invention, the present invention can provide carbon-silicon composite particles, each including: a porous carbon support including a surface layer part and a core part; and silicon (Si), wherein the porous carbon support includes mesopores having a diameter of 2 to 50 nm, and the ratio of the volume of the mesopores of the surface layer part to the volume of the total mesopores of the porous carbon support is 0.5 to 0.76.

## Claims

1. Carbon-silicon composite particles, comprising:
a porous carbon support comprising a surface layer part and a core part; and
silicon (Si),
wherein the porous carbon support comprises mesopores having a diameter of 2 to 50 nm, and
wherein the ratio of a volume of mesopores of the surface layer part to a volume of the total mesopores of the porous carbon support is 0.5 to 0.76.

2. The carbon-silicon composite particles of claim 1, wherein the porous carbon support has a ratio of the volume of mesopores to the volume of the total pores of 0.1 or more.

3. The carbon-silicon composite particles of claim 1, wherein a porosity of the surface layer part is greater than a porosity of the core part of the porous carbon support.

4. The carbon-silicon composite particles of claim 1, wherein a tap density of the porous carbon support is 0.7 g/mL or less.

5. The carbon-silicon composite particles of claim 1, wherein a BET specific surface area of the porous carbon support is in a range of 300 m²/g or more and/or 3,000 m²/g.

6. The carbon-silicon composite particles of claim 1, wherein a diameter of the porous carbon support is 20 µm or less.

7. The carbon-silicon composite particles of claim 1, wherein the porous carbon support comprises macropores having a diameter exceeding 50 nm, and
wherein the ratio of a volume of macropores to a volume of the total pores of the porous carbon support is 0.4 or less.

8. The carbon-silicon composite particles of claim 1, wherein the silicon is disposed on a surface and inside pores of the porous carbon support.

9. The carbon-silicon composite particles of claim 1, wherein a content of the silicon is 10 wt% or more based on a weight of the total particles.

10. A battery negative electrode material, comprising the carbon-silicon composite particles of claim 1.

11. A lithium-ion battery, comprising the battery negative electrode material of claim 10.

12. An all-solid-state battery, comprising the negative electrode material of claim 10.

13. A method for preparing carbon-silicon composite particles, the method comprising:
a first step of preparing a porous carbon support comprising mesopores having a diameter of 2 nm to 50 nm, and having a ratio of a volume of mesopores of a surface layer part to a volume of the total mesopores of 0.5 to 0.76; and
a second step of depositing silicon on the porous carbon support.

14. The method of claim 13, wherein the depositing of the second step is performed at a temperature of 300°C or more and/or 600°C or less and under a silane (SiH₄) gas atmosphere of 50 sccm or more and/or 500 sccm or less.
